# FASCICULE DE BREVET EUROPEEN

(11) **EP 0 493 291 B1**
(45) Date de publication et mention de la délivrance du brevet: **21.08.1996**
(21) Numéro de dépôt: 91470041.4
(22) Date de dépôt: 19.12.1991
(51) Int. Cl.: G01N 21/89

(54) **Dispositif de détection de défauts d'une bande en cours de défilement**
Einrichtung zur Erfassung von Fehlern an einer sich bewegenden Materialbahn
Apparatus for the detection of defects in a moving band

(30) Priorité: 24.12.1990 FR 9016239
(43) Date de publication de la demande: 01.07.1992
(73) Titulaire: SOLLAC S.A., F-92800 PUTEAUX (FR)
(72) Inventeur: Carton, Michel, F-78400 Chatou (FR); Viale, Jean-Pierre, F-78100 Saint Germain en Laye (FR)
(74) Mandataire: Ventavoli, Roger

(56) Documents cités:
- EP-A- 0 018 861
- EP-A- 0 153 218
- US-A- 3 448 279
- US-A- 3 843 890
- US-A- 4 853 776
- IRON AND STEEL ENGINEER. vol. 67, no. 5, Mai 1990, PITTSBURGH US pages 26 - 29; M. HO: 'Surface inspection system with defect classification.'
- PATENT ABSTRACTS OF JAPAN vol. 11, no. 303 (P-622)(2750) 3 Octobre 1987 & JP-A-62 093 637 ( HITACHI ) 30 Avril 1987
- PATENT ABSTRACTS OF JAPAN vol. 10, no. 387 (P-530)(2444) 25 Décembre 1986 & JP-A-61 175 552 ( KANZAKI PAPER ) 7 Août 1986

## Description

La présente invention est relative à la détection de défauts de surface d'une bande en cours de défilement et se rapporte plus particulièrement à la détection de défauts d'une bande de tôle à la sortie d'un train de laminage à froid, ou d'un bain de décapage.

On connaît un système de détection de défauts de surface d'une bande en cours de défilement qui comporte :
- des moyens optiques d'inspection de la face inférieure de la bande et des moyens optiques d'inspection de la face supérieure de la bande, comprenant, pour chaque face, au moins une source lumineuse d'éclairement de la surface correspondante de la bande et une caméra vidéo disposée sur le trajet de la lumière de la source réfléchie par la surface de la bande,
- des moyens électroniques d'indication des défauts associés respectivement aux moyens optiques d'inspection des faces inférieure et supérieure de la bande,- des moyens de traitement des informations délivrées par les moyens électroniques d'indication de défauts,
- et des moyens de visualisation des défauts des faces supérieure et inférieure de la bande connectés aux moyens de traitement d'informations.

Ce système de détection de défaut est notamment décrit dans le document intitulé "Surface inspection system with defect classification" de la revue périodique IRON AND STEEL ENGINEER, vol. 67, n° 5, mai 1990, PITTSBURGH US, pages 26-29, qui décrit le préambule de la revendication 1.

Le principal inconvénient du système décrit dans ce document réside dans le fait qu'il ne permet pas d'inspecter et de détecter les bords de la bande avec précision.

Pour détecter des bords, on connaît un système de détection de contours qui comporte les mêmes moyens généraux que ceux précédemment décrits, dans lesquels les moyens électroniques d'indications de défauts sont adaptés comme décrit dans le document EP 0 018 861.

Dans ce document, l'inspection n'est réalisée que sur une seule face d'un produit en feuille, notamment une feuille de tabac. Le principal inconvénient des systèmes d'inspection précédemment décrits réside dans le fait qu'ils ne donnent pas toujours une précision satisfaisante en raison du fait que, sur une seule face, les défauts de la tôle et les bords de celle-ci sont détectés par une seule et même caméra.

Il se révèle en particulier difficile de repérer avec précision la position des défauts sur la bande, parce que la bande peut subir des désalignements par rapport aux moyens optiques d'inspection et de détection sur son trajet.

Si, dans le champ d'observation de l'unique caméra d'inspection de surface sur une face, la bande est supportée par un rouleau, la surface du rouleau prend vite la couleur de la surface de la bande et la caméra ne peut plus distinguer avec fiabilité les bords de la bande.

On risque par ailleurs de confondre des défauts de la surface du rouleau de support avec des défauts de surface de la bande.

A l'inverse, si la bande n'est pas supportée dans le champ d'observation de l'unique caméra, on peut alors repérer avec précision les bords de bande à l'aide de l'unique caméra ; mais, la position de la bande, qui n'est plus supportée, va varier par rapport à la caméra , ce qui poserait problème à la détection des défauts.

On voit donc qu'un inconvénient majeur demeure et réside dans le fait que les systèmes de détection de défauts de l'art antérieur ne donnent pas toujours une précision satisfaisante, notamment au niveau de la position ou de la détection des défauts.

L'invention a donc pour but d'améliorer la précision dans la détection et le positionnement des défauts sur la bande.

Elle a donc pour objet un dispositif de détection de défauts de surface d'une bande en cours de défilement comportant :
- des moyens optiques d'inspection de la face inférieure de la bande et des moyens optiques d'inspection de la face supérieure de la bande, comprenant, pour chaque face, au moins une source lumineuse d'éclairement de la surface correspondante de la bande et une caméra vidéo disposée sur le trajet de la lumière de la source réfléchie par la surface de la bande,
- des moyens électroniques d'indication des défauts associés respectivement aux moyens optiques d'inspection des faces inférieure et supérieure de la bande,
- des moyens de traitement des informations délivrées par les moyens électroniques d'indication de défauts,
- et des moyens de visualisation des défauts des faces supérieure et inférieure de la bande connectés aux moyens de traitement d'informations, caractérisé en ce que, lesdits moyens électroniques d'indication des défauts comprennent des moyens de détection de contours de défauts connectés respectivement aux caméras vidéo d'inspection des faces inférieure et supérieure de la bande, et en ce que ledit dispositif comporte également :
- des moyens optiques de détection des bords de la bande, séparés des moyens optiques d'inspection des faces inférieure et supérieure de la bande, comprenant une source lumineuse disposée d'un côté de la bande et une caméra vidéo disposée de l'autre côté de la bande par rapport à ladite source,
- des moyens électroniques d'indication de présence de trous dans la bande, associés aux moyens optiques de détection des bords de la bande, comprenant des moyens de détection de bords et de trous de la bande connectés à la caméra vidéo de détection des bords de la bande,
- et des moyens de génération d'une fenêtre de traitement comprenant :
- un circuit d'établissement de tolérances pour la détection des bords de la bande par lesdits moyens de détection de bords et de trous, en vue de la compensation des variations de distances entre les caméras vidéo et la tôle, et des désalignements des moyens optiques d'inspection et de détection sur le trajet de la bande ;
- et un générateur de fenêtre de traitement de ligne, dont une entrée est reliée à une sortie des moyens de détection de bords et de trous dans la bande, et dont la sortie est connectée à des entrées correspondantes des moyens de détection.

L'invention sera mieux comprise à l'aide de la description qui va suivre, donnée uniquement à titre d'exemple et faite en se référant aux dessins annexés, sur lesquels :
- la Fig.1 est une vue schématique partielle d'une ligne de laminage montrant l'emplacement du dispositif de détection de défauts suivant l'invention ;
- la Fig.2 représente le schéma synoptique du dispositif de détection de défauts suivant l'invention ;
- la Fig.3 est un schéma synoptique de l'organisation générale de la structure électronique et informatique associée aux moyens optiques du dispositif de détection suivant l'invention ;
- la Fig.4 est un schéma plus détaillé de l'organisation matérielle de la partie électronique du dispositif suivant l'invention ;
- la Fig.5 est un schéma synoptique d'un circuit de détection des bords de la bande en défilement dans le dispositif suivant l'invention ;
- la Fig.6 est un schéma pus détaillé du circuit de la Fig.5 ; et
- la Fig.7 est un diagramme en fonction du temps montrant des signaux du circuit de détection des bords de la Fig.6.

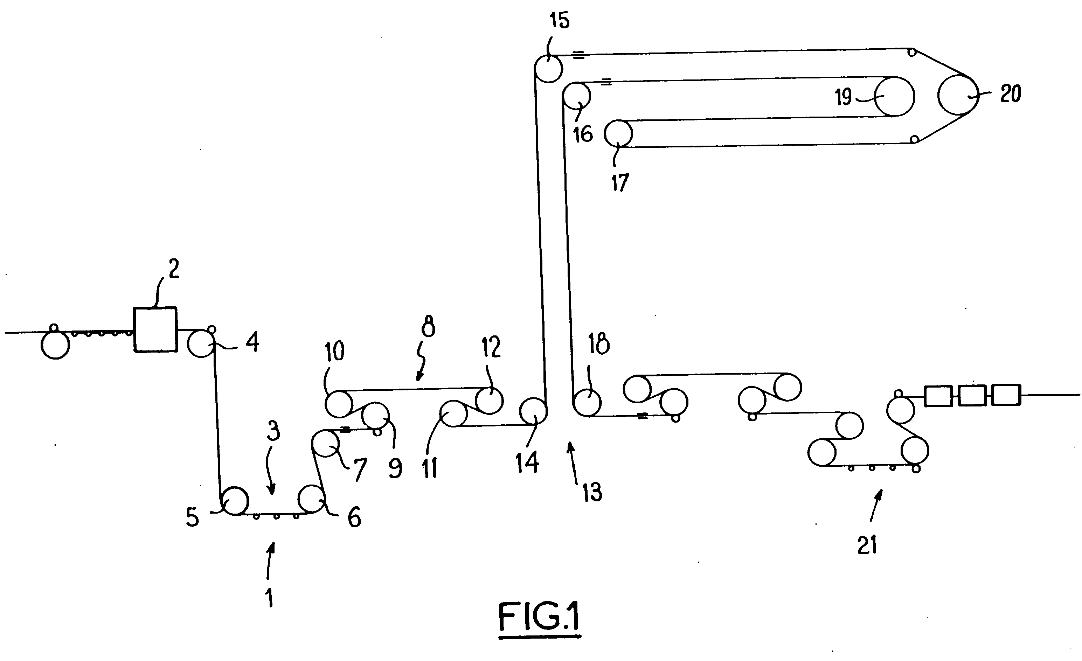

La Fig.1 est une représentation schématique partielle d'une installation de laminage et plus particulièrement de la partie d'une telle installation située entre la sortie de l'installation de décapage et l'entrée de l'installation de laminage à froid.

Cette installation comporte une section de sortie 1 de l'installation de décapage comportant une boucle 3 constituée par des rouleaux 4, 5, 6 et 7. La boucle est suivie d'une boucle 8 de tension de la bande.

La boucle 8 est formée de quatre rouleaux 9, 10, 11, 12 disposés par paires.

La boucle 8 de tension constitue la zone d'implantation du dispositif suivant l'invention. Elle est suivie d'une section 13 d'accumulateur de bande formée de rouleaux de renvoi 14, 15, 16, 17, 18 et de rouleaux de tension 19 et 20.

La section d'accumulateur est à son tour suivie d'une section en tandem d'entrée 21 de l'installation de laminage à froid. La section 21 ne sera pas décrite en détail ici car elle n'intervient pas directement dans la mise en oeuvre de l'invention.

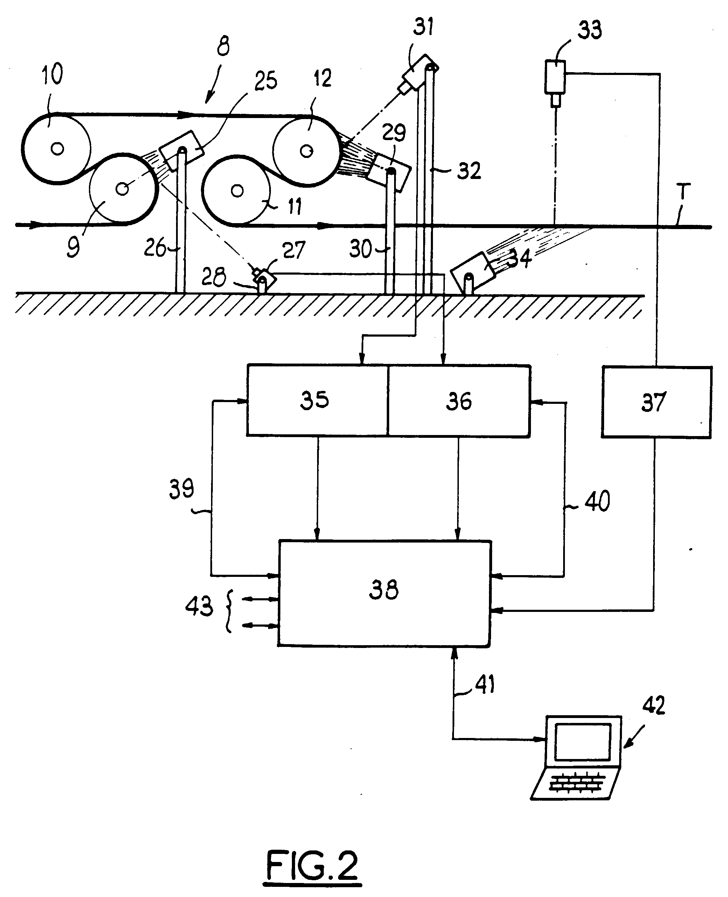

Le schéma synoptique représenté à la Fig.2 comporte la boucle de tension 8 ou tensionneuse.

Aux cylindres 9 et 10 de la tensionneuse sont associés des moyens d'inspection de la face inférieure de la tôle T selon une génératrice du cylindre 9.

Aux cylindres 11 et 12 sont associés des moyens d'inspection de la face supérieure de la tôle T selon une génératrice du cylindre 12.

Les moyens d'inspection de la face inférieure comprennent une rampe d'éclairage 25 orientable, montée sur un support fixe 26 et dirigée vers une génératrice du cylindre 9. A la rampe d'éclairage 25 est associée une caméra à couplage de charge 27 également orientable et portée par un support fixe 28.

De même, les moyens d'inspection de la face supérieure de la tôle T sont constitués par une rampe d'éclairage 29 portée par un support fixe 30 et orientée vers une génératrice du cylindre 12 et par une caméra à couplage de charge 31 portée par un support fixe 32.

De façon avantageuse, les caméras 27 et 31 comprennent des barrettes CCD linéaires munies d'un objectif permettant d'inspecter toute la largeur de la tôle T.

Le dispositif comporte en outre un troisième détecteur 33 destiné à détecter les trous dans la tôle et les bords de celle-ci. Il est disposé au-dessus d'une portion rectiligne de la tôle T, en aval de la tensionneuse 8.

Il coopère avec une source lumineuse 34 située au-dessous de la tôle T.

Le détecteur 33, également du type CCD, fonctionne donc pas transparence.

Les sorties des caméras 27 et 31 sont respectivement connectées aux entrées de systèmes électroniques 35, 36 d'indication de défauts des faces correspondantes de la tôle.

Le détecteur de trous 33 est relié à l'entrée d'un système électronique 37 d'indication de la présence d'un trou dans la tôle T.

Les systèmes 35, 36, 37 comportent chacun une sortie d'alarme de défaut de surface et le système 37, une sortie d'alarme de trou, respectivement connectées à une entrée correspondante d'un ordinateur 38.

Celui-ci est relié par des liaisons bidirectionnelles 39, 40 avec les systèmes électroniques 35, 36 et par une liaison 41 avec un terminal d'opérateur 42.

Il comporte enfin des liaisons 43 avec le système (non représenté) gérant le processus de l'installation.

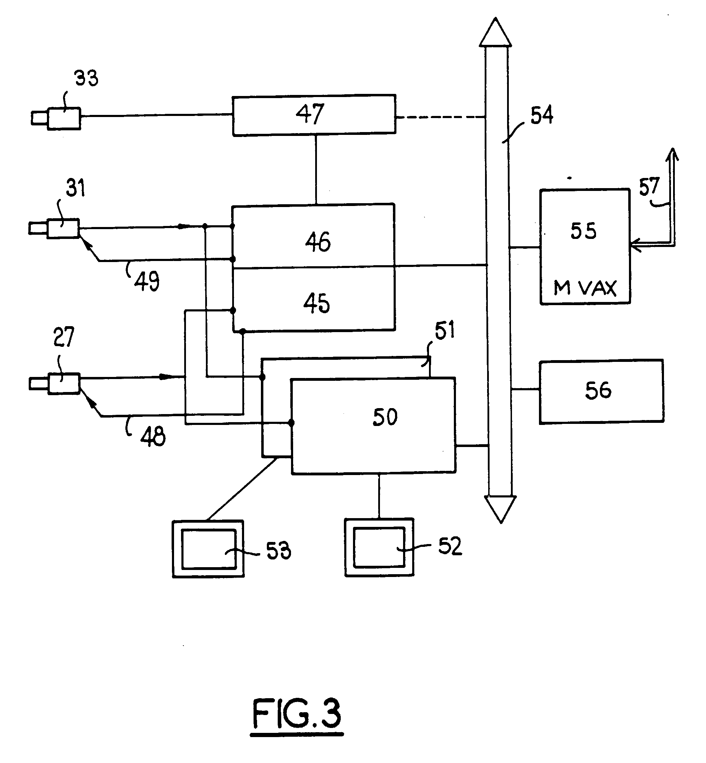

Le schéma de la Fig.3 représente l'organisation générale de la structure électronique et informatique du dispositif.

Les caméras CCD 27,31 sont connectées respectivement à des moyens de traitement numérique 45, 46 des signaux relatifs aux faces inférieure et supérieure de la tôle T, tandis que la caméra 33 de détection de la position des bords de la tôle et de détection de trous de celle-ci est reliée à des moyens de traitement 47.

Les moyens de traitement numérique 45 et 46 sont en outre connectés aux caméras 27 et 31 par des lignes de contrôle respectives 48, 49.

Selon l'invention, ils sont de plus connectés aux moyens de traitement 47 des signaux de détection des bords.

Les caméras CCD 27 et 31 d'inspection des faces de la tôle T sont en outre reliées à des mémoires 50, 51 d'imagerie numériques destinées au stockage des signaux de sortie des caméras. Lesdites mémoires d'imagerie numériques 50, 51 sont reliées respectivement à des moyens de visualisation 52, 53 qui peuvent être constitués par le terminal 42 du dispositif de la Fig.2.

Les moyens de traitement 45, 46, 47 et les mémoires 50, 51 sont connectés à un bus d'ordinateur ou Q bus 54 relié à son tour à un ordinateur 55 de type Microvax par exemple et à une mémoire de masse 56. L'ordinateur 55 comporte un bus de liaison 57 avec le reste du système de traitement.

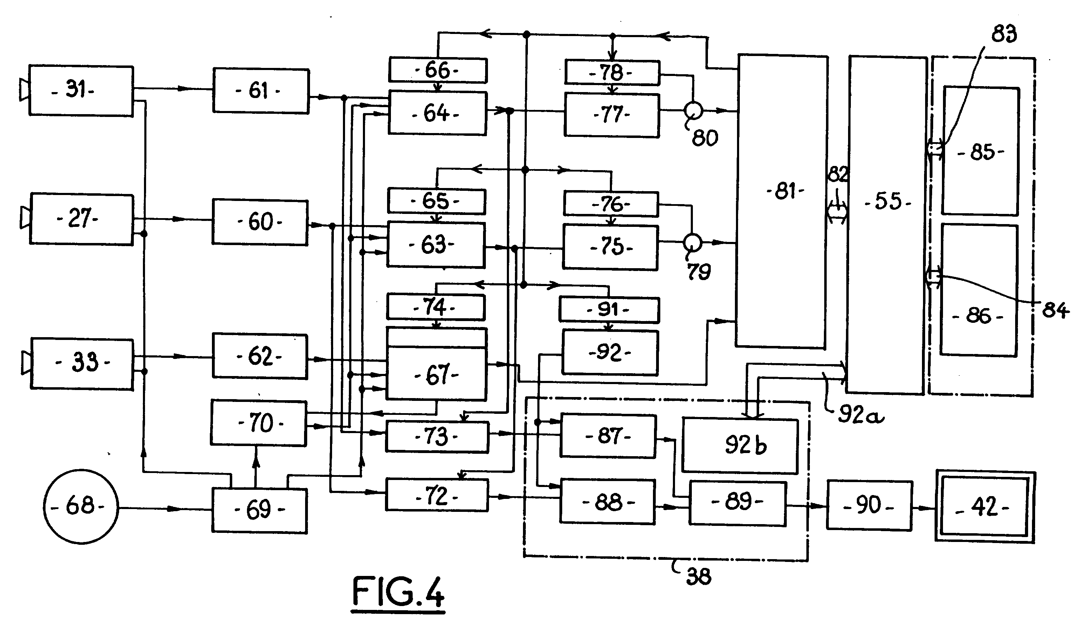

Sur la Fig.4, on a représenté plus en détail l'organisation matérielle de la partie électronique du dispositif suivant l'invention.

Cette partie électronique de traitement du signal regroupe les fonctions suivantes :
- détection de défauts par filtrage numérique et comptage des points d'aire, dépassant le seuil du filtre utilisé ;
- visualisation d'une image en temps réel ;
- asservissement à la vitesse de défilement de la tôle ;
- détection des bords de la tôle ;
- interface avec le calculateur (Q bus de DEC);
- asservissement du capteur par télécommande programmée.

Sur la Fig.4, on retrouve les caméras 27, 31 et 33 qui comportent en fait des barrettes CCD linéaires auxquelles sont associés des moyens de conditionnement à 2048 points.

Les sorties des caméras 27 et 31 sont connectées aux entrées d'amplificateurs vidéo 60, 61.

La sortie de la caméra 33 est également connectée à l'entrée d'un amplificateur vidéo 62.

Les sorties des amplificateurs vidéo 60, 61 des voies d'investigation des faces inférieure et supérieure de la tôle T, sont connectées à des premières entrées de circuits 63, 64 de détection des contours par filtre de Prewitt à chacun desquels est associé un circuit 65,66 d'établissement de seuil de Prewitt.

La sortie de l'amplification vidéo 62 de la voie de détection de trous et des bords de la tôle est connectée à une entrée d'un circuit 67 de détection de trous et des bords de la tôle T.

Il est en outre prévu une génératrice tachymétrique 68 couplée mécaniquement à un rouleau de la ligne de laminage de la Fig.1 et dont la sortie est connectée à l'entrée d'un circuit 69 de synchronisation.

Une sortie du circuit 69 est connectée aux entrées de synchronisation des caméras 27, 31, 33.

Une autre sortie du circuit 69 est connectée à des entrées de synchronisation des circuits de détection 63, 64 et 67.

Selon l'invention, pour assurer la connexion des moyens de traitement numérique 45 et 46 aux moyens de traitement 47 des signaux de détection des bords, une troisième sortie du circuit 69 est connectée à une entrée d'un générateur 70 de fenêtre de traitement de ligne, dont une autre entrée est reliée à une sortie du circuit 67 de détection de trous et de bords de tôle et dont la sortie est connectée à des entrées correspondantes des circuits de détection 63, 64 et 67.

Les sorties des amplificateurs vidéo 60 et 61 sont en outre connectées à des circuits 72, 73. d'incrustation de contours, recevant par ailleurs la sortie des détecteurs de contour 63, 64.

Au circuit 67 de détection de trous et de bords est associé un circuit de tolérance 74.

La sortie du détecteur 63 de contour de la face inférieure est connectée à l'entrée d'un circuit 75 de comptage de défauts d'aire de la face inférieure auquel est associé un circuit 76 à seuil d'aire.

De même, la sortie du détecteur 64 de contour de la face supérieure est connectée à l'entrée d'un circuit 77 de comptage des défauts d'aire auquel est associé un circuit 78 à seuil d'aire.

Les circuits 75, 76 et 77, 78 sont respectivement connectés à des comparateurs 79, 80 dont les sorties sont à leur tour connectées à un circuit 81 de commande d'interruption qui est également connecté directement à la sortie du détecteur 67 de trous et de bords.

Le circuit 81 est connecté par un bus 82 à l'ordinateur 55 (Fig.3).

Ce dernier est relié par des bus 83, 84 au système informatique général de l'établissement et en particulier à une mémoire 85 contenant les informations sur le produit et à un système 86 contenant les programmes de synchronisation du suivi des processus industriels.

Les circuits 72, 73 d'incrustation de contours sont connectés à l'ordinateur 38 (Fig.2) et en particulier à des circuits de numérisation et de mémorisation supérieur 87 et inférieur 88 dont les sorties sont connectées par l'intermédiaire d'un multiplexeur en 89 à un incrustateur vidéo 90 qui à son tour, est relié au moniteur de visualisation 52 (Fig.2)

Le dispositif de la Fig.4 comporte, enfin connecté au circuit 74 d'établissement de tolérance pour les trous et les bords de tôle, un circuit 91 de formation de décalages et de sauts auquel est connecté un circuit de fenêtrage d'image 92 dont la sortie est connectée à des entrées correspondantes des circuits 87 et 88 de numérisation et de mémorisation des images provenant des caméras 27 et 31 d'inspection des faces inférieure et supérieure de la tôle T. L'ordinateur 55 est relié par un bus 92a à une mémoire partagée 92b faisant partie de l'ordinateur 38.

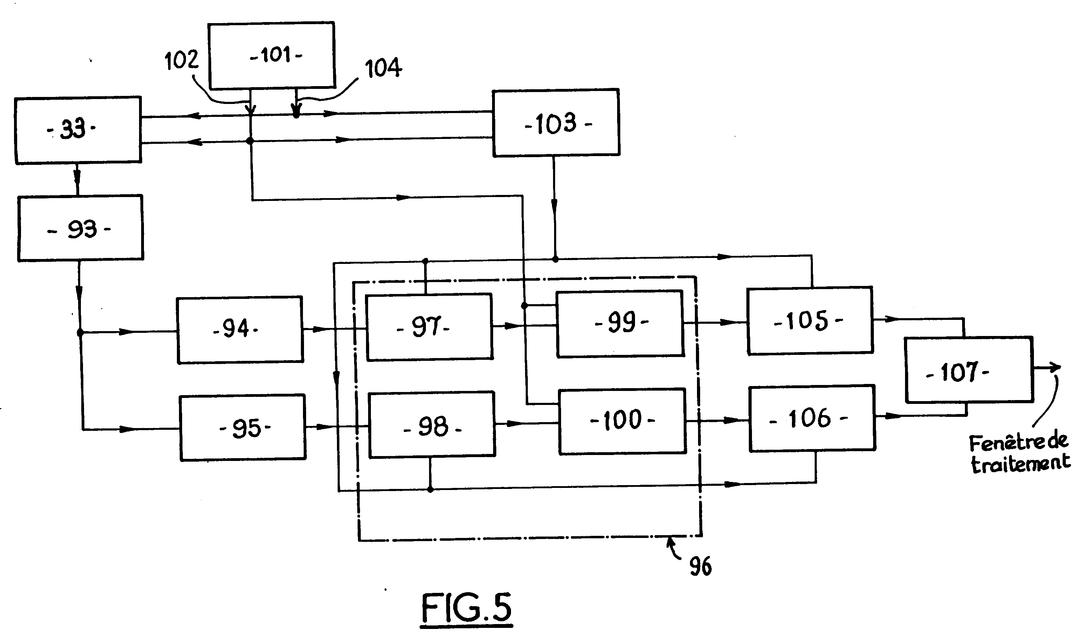

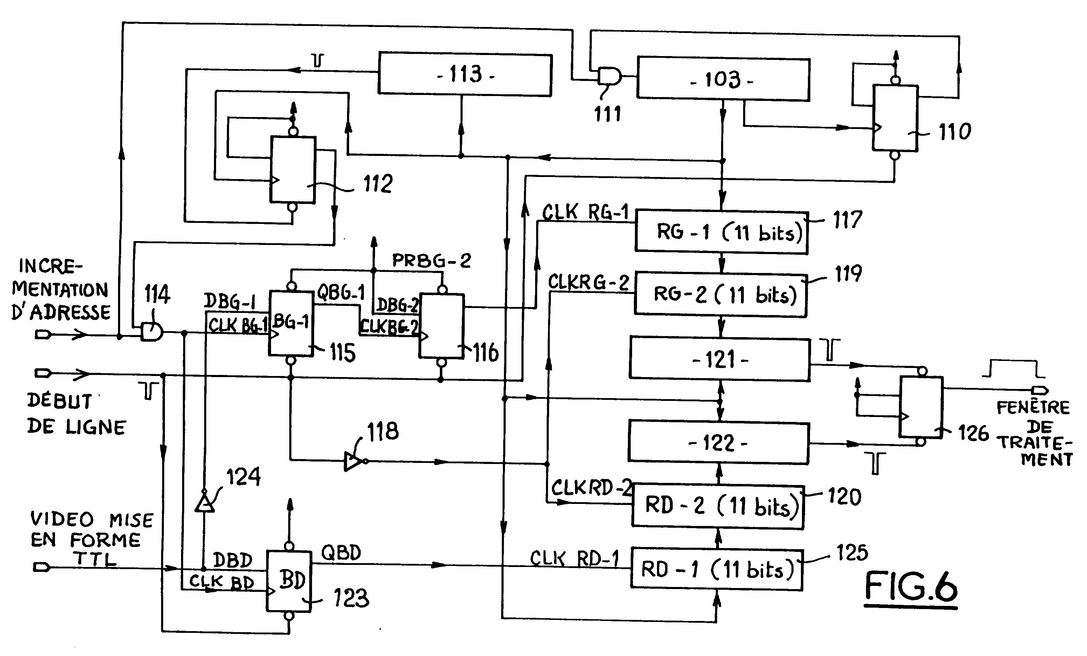

Sur les Fig.5 et 6, on a représenté sous forme de schéma synoptique des moyens de détection de bords de la tôle T qui font partie du dispositif d'inspection suivant l'invention.

Ce dispositif est associé à la caméra 33 des Fig.2 à 4.

Il est représenté à la Fig.4 par le rectangle 67.

La caméra 33 représentée à la Fig.5 par un rectangle à sa sortie de signal connectée à un circuit 93 de mise en forme des signaux vidéo comprenant un comparateur.

La sortie de ce circuit est connectée à un circuit 94 de détection du premier front descendant du signal vidéo, matérialisant le premier bord de la tôle rencontré et à un circuit 95 de détection de tous les fronts montants, matérialisant les trous dans la tôle et le second bord de celle-ci.

Les sorties des circuits 94 et 95 sont connectées à un circuit tampon double 96 comportant un premier registre 97 de mémorisation de bord gauche et un premier registre 98 de mémorisation de bord droit.

A ces deux premiers registre 97, 98 sont connectés des seconds registres de mémorisation d'adresse de bord gauche et de bord droit 99, 100.

Le circuit comporte en outre un générateur 101 de signaux de synchronisation dont une sortie de ligne 102 est connectée à la caméra CCD 33 et à une entrée de remise à zéro d'un compteur d'adresse 103 et dont une sortie de pixel 104 est également connectée à la caméra CCD 33 et à une entrée d'incrémentation d'adresse du compteur 103.

La sortie de ligne 102 du générateur 101 est en outre reliée à des entrées des seconds registres 99 et 100 du circuit tampon double 96.

La sortie du compteur d'adresse 103 est reliée à des entrées des premiers registres 97, 98 du circuit tampon double 96 et à des premières entrées de comparateurs numériques 105, 106 dont les secondes entrées sont connectées aux sorties des seconds registres 99 et 100 respectivement.

Les sortie des comparateurs 105 et 106 sont reliées à des entrées correspondantes d'un circuit de fenêtre de traitement 107.

Ainsi qu'on le voit à la Fig.2, en mode "transparence" pour la détection des bords de la tôle défile entre la caméra 33 et la source lumineuse 34.

En mode "réflexion" ou "éclairage rasant" pour le traitement d'image correspondant à la détection de défauts de surface, les caméras et les sources lumineuses sont disposées du même côté de la tôle à examiner.

La dynamique du signal vidéo issu de la caméra 33 fonctionnant en mode transparence est d'environ 1 volt (1V = niveau de blanc, OV = niveau de noir).
- l'amplitude de ce signal est de 1V entre le début de ligne et l'apparition du bord gauche de la tôle.
- entre le bord gauche et le bord droit, l'amplitude est de OV car la caméra ne reçoit plus de lumière de la source 34.
- en présence de trous dans la tôle, l'amplitude du signal de sortie de la caméra est de 1V.
- entre le bord droit et la fin de ligne, l'amplitude remonte à 1V.

Le signal vidéo mis en forme par le comparateur 93 a la même forme que le signal vidéo initial, mais son niveau est un niveau TTL (0-5V).

La distance entre la tôle et les caméras doit être rigoureusement identique et les objectifs doivent présenter les mêmes focales de façon qu'à un même pixel sur chaque caméra corresponde une même abscisse sur la tôle T.

Le fonctionnement de la détection des bords de tôle va être décrit en référence au schéma de la Fig.6.

La première transition HAUT/BAS rencontrée sur la ligne vidéo correspond au bord de tôle gauche.

La dernière transition BAS/HAUT du signal vidéo correspond au bord de tôle droit.

Plusieurs transitions BAS/HAUT dans une même ligne signifient qu'il y a au moins un trou dans la tôle.

Comme représenté à la Fig.6, le signal DEBUT DE LIGNE est appliqué à une entrée d'une bascule 110 connectée par une autre de ses entrées avec la sortie du compteur d'adresse 103.

La sortie de la bascule 110 est connectée à une entrée d'une porte ET 111 dont une autre entrée est connectée à une entrée de signal INCREMENTATION D'ADRESSE.

La sortie de la porte ET 111 est connectée à l'entrée du compteur d'adresse 103.

Le circuit de la Fig.6 comporte en outre une bascule 112 dont une entrée est connectée à une sortie du compteur d'adresse 103 et reçoit un signal d'adresse courante. Une autre de ses entrées est connectée à la sortie d'un comparateur d'adresse 113 également connecté à la sortie d'adresse courante du compteur d'adresse 103.

La sortie de la bascule 112 est connectée à une entrée d'une porte ET 114 dont l'autre entrée reçoit le signal INCREMENTATION D'ADRESSE.

La sortie de la porte ET 114 est connectée à une entrée d'une bascule 115 dont la sortie est connectée à une entrée d'une bascule 116.

Les bascules 115 et 116 reçoivent en outre un signal DEBUT DE LIGNE qui est de plus appliqué à la bascule 110 associée au compteur d'adresse 103.

La sortie de la bascule 116 est connectée à un premier registre d'adresse de bord gauche 117 connecté par ailleurs à la sortie du compteur d'adresse 103.

Le signal DEBUT DE LIGNE est également transmis par un inverseur 118 à un second registre d'adresse de bord gauche 119 et à un second registre d'adresse de bord droit 120.

La sortie du compteur d'adresse 103 est en outre connectée à l'entrée d'un comparateur 121 d'adresse de bord gauche et à l'entrée d'un comparateur 122 d'adresse de bord droit.

Le circuit de la Fig.6 comporte de plus une bascule 123 recevant sur son entrée un signal MISE EN FORME VIDEO (TTL) qui après inversion dans un inverseur, est également appliqué à la bascule 115.

La bascule 123 reçoit également le signal DEBUT DE LIGNE et elle est connectée à la sortie de la porte ET 114. Sa sortie est reliée à l'entrée d'un premier registre d'adresse de bord droit 125, lui aussi connecté à la sortie du compteur d'adresse 103.

La sortie du premier registre d'adresse de bord droit 125 est connectée à l'entrée du second registre d'adresse de bord droit 120.

Les sorties des comparateurs d'adresse de bord gauche et de bord droit 121, 122 sont connectées à une bascule 126 de production d'un signal de fenêtre de traitement.

Les conditions de départ sont les suivantes :

Une ligne formée de 2048 pixels comporte les adresses de 0 à 2047.

Le compteur d'adresse 103 reste bloqué à 2047, ce qui se traduit par un premier état de la bascule 110, jusqu'à l'apparition du signal "DEBUT DE LIGNE" suivant.

Une fenêtre d'autorisation de détection des bords de la tôle est créée entre les adresses 8 et 2040 par la bascule 112.

Le bit 3 de poids 8 provenant du compteur d'adresse 103 met la bascule 112 à l'état "HAUT".

Le décodage de l'adresse 2040, les 8 bits de poids fort étant positionnés, remet la bascule 112 à zéro.

Le signal "DEBUT DE LIGNE" désarme les bascules 115 et 116.

On va maintenant examiner la détection du bord gauche de la tôle T.

Le signal vidéo mis en forme puis inversé est appliqué à la borne DBG-1 de la bascule BG-1 115 alors que la borne CLKG-1 est connectée uniquement entre les adresses 8 et 2040 à la commande "INCREMENTATION D'ADRESSE", par l'intermédiaire de la porte ET 114 dont une entrée est connectée à la sortie de la bascule 112.

Il en résulte que la sortie QBG-1 de cette bascule suit l'entrée DBG-1 mais de façon "synchrone".

Cette sortie QBG-1 est connectée à l'entrée CLKBG-2 de la bascule GB-2 suivante 116, PRBG2 et DBG-2 étant maintenues à 5V.

La sortie QBG-2 de la bascule 116 prend l'état haut au moment du premier front montant de la VIDEO INVERSEE et y reste jusqu'au désarmement des bascules (début de ligne).

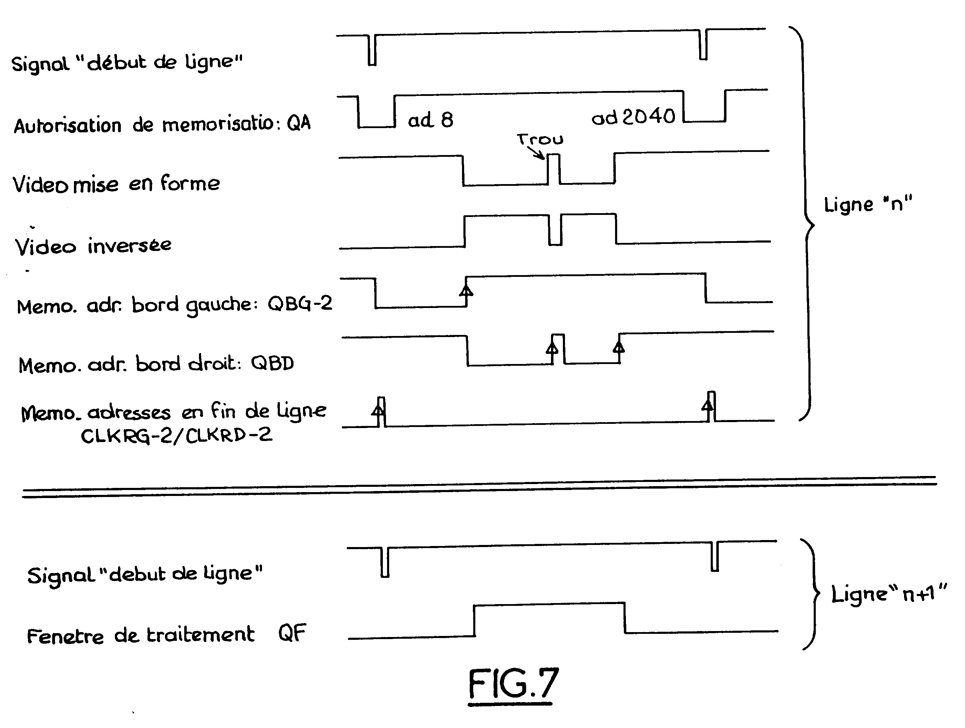

Le diagramme des temps représenté à la Fig.7 illustre cette situation. Sur cette figure, on a représenté l'ensemble des signaux pour une ligne de balayage n.

La transition montante sert de signal d'horloge pour le premier registre de mémorisation d'adresse RG-1 117 à 11 bits. Ce registre met en mémoire l'adresse "courante" au moment de la transition.

Pour la détection du bord droit, le signal vidéo est appliqué à la broche DBG de la bascule BD 123. La borne CLKBD est connectée à la commande "INCREMENTATION D'ADRESSE", uniquement entre les adresses 8 et 2040 ; donc la sortie QBD suit BD en mode synchrone.

Chaque transition montant du signal QBD provoque une mise en mémoire de l'adresse courante en agissant sur la borne CLKRD-1 du registre de mémorisation RD-1 125.

L'adresse contenue dans ce registre en fin de ligne, est l'adresse du bord droit.

La présence d'un trou dans la tôle provoque une mémorisation intermédiaire.

A la fin d'une ligne n considérée, les registres RG-1 et RD-1 117 et 125 contiennent respectivement l'adresse du bord gauche et celle du bord droit de la tôle.

Au début de la ligne n + 1 suivante, par l'action du signal "DEBUT DE LIGNE INVERSE" sur les bornes d'horloge des registres RG-2, RD-2, ces adresses sont transférées dans ces derniers registres, libérant ainsi les registres 117 et 125 afin qu'ils puissent mémoriser les adresses des bords gauche et droit de la ligne n + 1.

Ainsi, au début de la ligne n + 1, le registre RG-2119 contient l'adresse du bord de tôle gauche et le registre RD-2 contient l'adresse du bord de tôle droit de la ligne n.

La création de la fenêtre de traitement a lieu comme suite.

A la ligne n + 1 :
- le contenu du registre RG-2 119 contenant l'adresse du bord gauche acquise à la ligne n, est comparé à l'adresse courante dans le comparateur 121. Lorsqu'il y a égalité, la bascule 126 est armée ;

Le contenu du registre RD-2 120 contenant l'adresse du bord droit acquise à la ligne n, est comparé à l'adresse courante dans le comparateur 122. Lorsqu'il y a égalité la bascule 126 est désarmée.

Pour être certain de ne traiter le signal qu'en présence de la tôle, on ajoute un décalage à l'adresse du bord gauche et on le retranche à celle du bord droit.

Cette procédure permet, à partir d'un décodage auquel on ajoute un décalage d'adresses, de délimiter une zone de chaque ligne vidéo pendant laquelle le traitement du signal devra être validé.

La réactualisation de cette zone se fait à chaque fin de ligne.

Le fonctionnement du dispositif suivant l'invention pour la détection d'un défaut de surface sur la tôle T va être décrit en considérant par exemple la caméra 27 d'inspection de la face inférieure de la tôle et la voie correspondante de traitement représentée à la Fig.4.

La caméra 27 synchronisée par le circuit 69 à partir de la génératrice tachymétrique 68 entraînée par l'un des rouleaux de la ligne de laminage, assure une prise de 2048 points d'image par ligne de balayage de la région de la face inférieure de la tôle T qui passe sur le rouleau 9 et qui est éclairée par la rampe 25.

Les signaux de sortie de la caméra 27 sont amplifiés dans l'amplificateur 60 et appliqués au détecteur de contours 63 qui reçoit également un signal du circuit 70 générateur de fenêtre de traitement de ligne et un signal de synchronisation du circuit 69.

Le circuit de détection 63 reçoit également une valeur de seuil de Prewitt du circuit 65 et lorsque le signal qu'il reçoit de la caméra 27 est supérieur au seuil de Prewitt, il délivre un signal de défaut qui est appliqué au compteur de défauts 75.

Celui-ci reçoit un signal de seuil d'aire de défaut codé sur 16 bits du circuit 76.

Lorsque le nombre de points en défaut d'une image atteint la valeur du seuil d'aire, le comparateur 79 délivre un signal d'interruption à l'entrée correspondante du circuit d'interfaces 81. L'information correspondante est transmise à l'ordinateur 55 et à partir de celui-ci à la mémoire 85 de stockage d'informations sur le produit. En outre, un signal d'interruption est transmis au système 86.

Le signal de sortie de la caméra est en outre appliqué après amplification au circuit d'incrustation de contours 72, puis au circuit 88 de numérisation et de mémorisation de l'ordinateur 38.

Le circuit 88 reçoit de plus un signal de fenêtrage d'image engendré par le circuit 92 à partir d'un signal de décalage et de saut généré par le circuit 91, qui permet de ne retenir en mémoire pour la visualisation qu'un pixel sur "n" (par exemple 4), pixels de la ligne de traitement, afin de ne pas surcharger cette mémoire.

Le circuit de numérisation 88 ne prend en compte que ceux des signaux provenant du circuit 72 qui sont contenus dans la fenêtre définie par le circuit de fenêtrage 92 et qui correspond à la largeur utile de la tôle T.

La production de la fenêtre de traitement a été décrite en référence aux Fig.5 et 6.

Les images numérisées représentant les défauts à examiner sont mutiplexées et sont appliquées à l'incrustateur vidéo 90 qui commande l'apparition sur l'écran du moniteur 42 d'informations relatives aux défauts détectés sur les faces inférieure et supérieure de la tôle.

Le fonctionnement de la voie associée à la caméra 31 d'inspection de la face inférieure de la tôle est le même que celui de la voie associée à la caméra 27 d'inspection de la face inférieure.

La détection de trous dans la tôle provoque l'émission par le détecteur 67 d'un signal d'interruption qui est transmis par le circuit d'interface 81 à l'ordinateur 55, puis au circuit 86 de synchronisation du suivi du processus industriel.

## Revendications

1. Dispositif de détection de défauts d'une bande en cours de défilement, comportant :
- des moyens optiques (25, 27) d'inspection de la face inférieure et des moyens optiques (29, 31) d'inspection de la face supérieure de la bande, comprenant chacun une source lumineuse (25, 29) d'éclairement de la surface correspondante de la bande et une caméra vidéo (27, 31) disposée sur le trajet de la lumière de la source (25, 29) réfléchie par la surface de la bande,
- des moyens électroniques (35, 36) d'indication des défauts associés respectivement aux moyens optiques (25, 27, 29, 31) d'inspection des faces inférieure et supérieure de la bande,
- des moyens (38) de traitement des informations délivrées par les moyens électroniques (35, 36) d'indication des défauts,
- et des moyens (42) de visualisation des défauts des faces supérieure et inférieure de la bande connectés aux moyens de traitement d'informations (38),
caractérisé en ce que, lesdits moyens électroniques (35, 36) d'indication des défauts comprennent des moyens (63, 65, 64, 66) de détection de contours de défauts connectés respectivement aux caméra video (27, 31) d'inspection des faces inférieure et supérieure de la bande, et en ce que ledit dispositif comporte également :
- des moyens optiques (33, 34) de détection des bords de la bande séparés des moyens optiques (25, 27, 29, 31) d'inspection des faces inférieure et supérieure de la bande, comprenent une source lumineuse (34) disposée d'un côté de la bande et une caméra vidéo (33) disposée de l'autre côté de la bande par rapport à la source (34),
- des moyens électroniques (37) d'indication de présence de trous dans la bande, associés aux moyens optiques (33, 34) de détection des bords de la bande, comprenant des moyens (67) de détection des bords et de trous de la bande connectés à la caméra vidéo (33) de détection des bords de la bande,
- et des moyens de génération d'une fenêtre de traitement comprenant :
- un circuit (74) d'établissement de tolérances pour la détection des bords de la bande par les moyens de détection (67), en vue de la compensation des variations de distances entre les caméras vidéo (27, 31, 33) et la bande et des désalignements des moyens optiques d'inspection et de détection sur le trajet de la bande ;
- et un générateur (70) de fenêtre de traitement de ligne, dont une entrée est reliée à une sortie des moyens (67) de détection de bords et de trous de la bande, et dont la sortie est connectée à des entrées correspondantes des circuits de détection (63, 64).

2. Dispositif suivant la revendication 1, caractérisé en ce que lesdits moyens électroniques (35, 36) d'indication des défauts comprennent également :
- des moyens (75, 76, 79, 77, 78, 80) de comptage de défauts d'aire connectés aux moyens (63, 65, 64, 66) de détection de contours de défauts ;
- un circuit d'interface (81) de transmission de signaux d'interruption à un ordinateur (55) de traitement des informations de défaut ;
- des moyens (85) de mémorisation de défauts ;
- et des moyens de synchronisation (69) du suivi de processus commandés par l'ordinateur(55).

3. Dispositif suivant la revendication 1 ou 2, caractérisé en ce que les moyens (67) de détection de bords et de trous de la bande sont connectés par le circuit d'interface (81) à l'ordinateur (55) de traitement des informations de défaut pour délivrer à celui-ci des signaux d'interruption en cas de présence de trous dans la bande.

4. Dispositif suivant l'une quelconque des revendications précédentes caractérisé en ce que lesdits moyens (38) de traitement des informations sont constitués par un ordinateur de commande de l'affichage sur le moniteur (42) qui comporte :
- un circuit (72, 73) d'incrustation de contours connecté à chacune des caméras (27, 31) d'inspection des faces inférieure et supérieure de la bande ;
- un circuit (87, 88) de numérisation et de mémorisation des contours connecté à chaque circuit d'incrustation de contour (72, 73) ;
- un multiplexeur (89) des signaux de sortie des circuits de numérisation (87, 88) ;
- un incrustateur vidéo (90) interposé entre le multiplexeur (89) et le moniteur de visualisation (42) ;
- et une mémoire partagée (92b) reliée à l'ordinateur (55) par un bus (92a).

5. Dispositif suivant la revendication 4, caractérisé en ce que les moyens de génération d'une fenêtre de traitement comprennent en outre un circuit (92) de fenêtrage d'image connecté à un circuit (91) d'établissement de signaux de décalage et de saut, destiné à appliquer aux circuits de numérisation et de mémorisation (87, 88) des signaux de fenêtre de traitement destinés à assurer la prise en compte de contours utiles de la bande.

6. Dispositif suivant l'une quelconque des revendications précédentes, caractérisé en ce que les moyens de génération d'une fenêtre de traitement comportent un circuit (94) de détection du premier front descendant du signal vidéo provenant de la caméra vidéo (33) de détection de bords de bande et un circuit (95) de détection de tous les fronts montants dudit signal, un circuit tampon double (96) comprenant un premier registre (97) de mémorisation de bord gauche et un premier registre (98) de mémorisation de bord droit auxquels sont respectivement connectés un second registre (99) de mémorisation de bord gauche et un second registre (100) de mémorisation de bord droit, les sorties des seconds registres étant respectivement connectées à des entrées de comparateurs (105, 106) qui reçoivent sur d'autres entrées des signaux de sortie d'un compteur d'adresse (103) relié à la caméra vidéo (33) de détection de bords de bande.

## Claims

1. Device for detecting defects in a moving strip, including:
- optical means (25, 27) for inspecting the lower face and optical means (29, 31) for inspecting the upper face of the strip, each comprising a light source (25, 29) for illuminating the corresponding surface of the strip, and a video camera (27, 31) arranged on the path of the light from the source (25, 29) reflected by the surface of the strip,
- electronic defect-indication means (35, 36) respectively associated with the optical means (25, 27, 29, 31) for inspecting the lower and upper faces of the strip,
- means (38) for processing data delivered by the electronic defect-indication means (35, 36),
- and means (42) for visualizing the defects of the upper and lower faces of the strip, which are connected to the data processing means (38),
characterized in that the said electronic defect-indication means (35, 36) comprise means (63, 65, 64, 66) for detecting contours of defects, which are respectively connected to the video cameras (27, 31) for inspecting the lower and upper faces of the strip, and in that the said device also includes:
- optical means (33, 34) for detecting the edges of the strip, which are separate from the optical means (25, 27, 29, 31) for inspecting the lower and upper faces of the strip, comprising a light source (34) arranged on one side of the strip, and a video camera (33) arranged on the other side of the strip from the source (34),
- electronic means (37) for indicating the presence of holes in the strip, which are associated with the optical means (33, 34) for detecting the edges of the strip, comprising means (67) for detecting the edges and holes in the strip, which are connected to the video camera (33) for detecting the edges of the strip,
- and means for generating a processing window, comprising:
- a circuit (74) for establishing tolerances for the detection of the edges of the strip by the detection means (67), with a view to compensation for the variations in distances between the video cameras (27, 31, 33) and the strip and the misalignment of the optical inspection and detection means on the path of the strip;
- and a line processing window generator (70), an input of which is connected to an output of the means (67) for detecting edges and holes of the strip, and the output of which is connected to corresponding inputs of the detection circuits (63, 64).

2. Device according to Claim 1, characterized in that the said electronic defect-indication means (35, 36) also comprise:
- means (75, 76, 79, 77, 78, 80) for counting area defects, connected to the means (63, 65, 64, 66) for detecting defect contours;
- an interface circuit (81) for transmitting interrupt signals to a computer (55) for processing the defect data;
- means (85) for storing defects;
- and means, controlled by the computer (55), for synchronizing (69) the execution of the process.

3. Device according to Claim 1 or 2, characterized in that the means (67) for detecting edges and holes of the strip are connected by the interface circuit (81) to the computer (55) for processing the defect data, in order to deliver interrupt signals thereto in the event of holes being present in the strip.

4. Device according to any one of the preceding claims, characterized in that the said data processing means (38) consist of a computer for controlling the display on the monitor (42), which includes:
- a contour overlay circuit (72, 73), connected to each of the cameras (27, 31) for inspecting the lower and upper faces of the strip;
- a circuit (87, 88) for contour digitization and storage, connected to each contour overlay circuit (72, 73);
- a multiplexer (89) for the output signals of the digitization circuits (87, 88);
- a video overlay unit (90) interposed between the multiplexer (89) and the visualization monitor (42);
- and a shared memory (92b) connected to the computer (55) by a bus (92a).

5. Device according to Claim 4, characterized in that the means for generating a processing window furthermore comprise an image windowing circuit (92) connected to a circuit (91) for establishing offset and jump signals, intended to apply to the digitization and storage circuits (87, 88) processing window signals intended to take account of useful contours of the strip.

6. Device according to any one of the preceding claims, characterized in that the means for generating a processing window include a circuit (94) for detecting the first falling edge of the video signal originating from the video camera (33) for detecting strip edges, and a circuit (95) for detecting all the rising edges of the said signal, a double buffer circuit (96) comprising a first left-edge storage register (97) and a first right-edge storage register (98), to which a second left-edge storage register (99) and a second right-edge storage register (100) are respectively connected, the outputs of the second registers being respectively connected to inputs of comparators (105, 106) which receive on other inputs output signals of an address counter (103) connected to the video camera (33) for detecting the strip edges.

## Patentansprüche

1. Einrichtung zur Erfassung von Fehlern an einer sich bewegenden Materialbahn, mit:
- optischen Überprüfungseinrichtungen (25, 27) für die untere Fläche und optischen Überprüfungseinrichtungen (29, 31) für die obere Fläche der Materialbahn, wovon eine jede eine Lichtquelle (25, 29) für die Beleuchtung der entsprechenden Fläche der Materialbahn und eine Videokamera (27, 31) aufweist, welche im Wege des von der Fläche der Materialbahn reflektierten Lichtes der Quelle (25, 29) angeordnet ist,
- elektronischen Anzeigeeinrichtungen (35, 36) für die jeweils den optischen Überprüfungseinrichtungen (25, 27, 29, 31) für die untere und obere Fläche der Materialbahn zugeordneten Fehler,
- Verarbeitungseinrichtungen (38) für die von den elektronischen Anzeigeeinrichtungen (35, 36) der Fehler gelieferten Informationen,
- und mit Visualisierungseinrichtungen (42) für die Fehler der oberen und unteren Flächen der Materialbahn, die mit den Verarbeitungseinrichtungen (38) verbunden sind,
dadurch gekennzeichnet, daß die elektronischen Anzeigeeinrichtungen (35, 36) für die Fehler Fehlererfassungsseinrichtungen (63, 65, 64, 66) für die Fehlerkontur aufweisen, die jeweils an die Videokamera (27, 31) für die Überprüfung der oberen und unteren Fläche der Materialbahn angeschlossen sind, und daß die Einrichtung auch folgendes aufweist:
- optische Detektoreinrichtungen (33, 34) für die Ränder der Materialbahn, die von den optischen Überprüfungseinrichtungen (25, 27, 29, 31) für die untere und obere Fläche der Materialbahn gesondert sind und eine an einer Seite der Materialbahn angeordnete Lichtquelle (34) und eine bezüglich der Quelle (34) an der anderen Seite der Materialbahn angeordnete Videokamera (33) umfassen,
- elektronische Einrichtungen (37) zur Anzeige des Vorliegens eines Loches in der Materialbahn, die den optischen Detektoreinrichtungen (33, 34) für die Ränder der Materialbahn zugeordnet ist und mit der Videokamera (33) für die Feststellung der Ränder der Materialbahn verbundene Detektoreinrichtungen (67) für Ränder und Löcher der Materialbahn aufweist,
- sowie Fenstergeneratoreinrichtungen für die Verarbeitung, welche folgendes umfassen:
- eine Schaltung (74) zur Einrichtung von Toleranzen für die Feststellung der Ränder der Materialbahn durch die Detektoreinrichtungen (67) im Hinblick auf die Kompensation von Abstandsveränderungen zwischen der Videokamera (27, 31, 33) und der Materialbahn und von Ausrichtungsfehlern der optischen Einrichtungen für die Überprüfung und für die Detektion auf den Weg der Materialbahn;
und einen mitlaufenden Fenstergenerator (70), dessen Eingang mit einem Ausgang der Detektoreinrichtungen (67) für Ränder und Löcher der Materialbahn verbunden ist, und dessen Ausgang an die entsprechenden Eingänge der Detektorkreise (63, 64) angeschlossen ist.

2. Einrichtung nach Anspruch 1, dadurch gekennzeichnet, daß die elektronischen Anzeigeeinrichtungen (35, 36) der Fehler auch folgendes aufweisen:
- Zähleinrichtungen (75, 76, 79, 77, 78, 80) für Flachenfehler, die mit den Detektoreinrichtungen (63, 65, 64, 66) für die Fehlerkonturen verbunden sind;
- eine Schnittstelle (81) für die Übertragung von Unterbrechungssignalen an einen Computer (55) für die Verarbeitung von Fehlerinformationen;
- eine Einrichtung (85) zum Speichern von Fehlern;
- und eine vom Computer gesteuerte Synchronisationseinrichtung (88) für den Ablauf des Vorganges.

3. Einrichtung nach Anspruch 1 oder 2, dadurch gekennzeichnet, daß die Detektoreinrichtungen (67) für Ränder und Löcher der Materialbahn über die Schnittstelle (81) mit dem Computer (55) für die Verarbeitung von Fehlerinformationen verbunden sind, um diesem Unterbrechungssignale im Falle des Vorliegens von Löchern in der Materialbahn zu liefern.

4. Einrichtung nach einem der vorhergehenden Ansprüche, dadurch gekennzeichnet, daß die Verarbeitungseinrichtungen (38) für die Informationen von einem Steuercomputer für die Anzeige am Monitor (42) gebildet sind, wobei sie folgendes aufweist:
- eine Einprägeschaltung (72, 73) für Konturen, die an jede Kamera (27, 31) für die Überprüfung der unteren und oberen Fläche der Materialbahn angeschlossen ist;
- einen Digitalisier- und Speicherkreis (87, 88) für Konturen, der mit jeder Einprägeschaltung (72, 73) für Konturen verbunden ist;
- einen Multiplexer (89) für die Ausgangssignale der Digitalisierkreise (87, 88);
- einen zwischen den Multiplexer (89) und den Visualisationsmonitor (42) geschalteten Videoeinpräger (90);
- und einen geteilten Speicher (92b), der über einen Bus (92a) an den Computer (55) angeschlossen ist.

5. Einrichtung nach Anspruch 4, dadurch gekennzeichnet, daß die Fenstergeneratoreinrichtungen für die Verarbeitung überdies eine Fensterbildungsschaltung (92) für das Bild aufweisen, die mit einer Schaltung (91) zur Erstellung von Verschiebungs- und Sprungsignalen verbunden ist, welche zum Anlegen von Fenstersignalen für die Verarbeitung an die Digitalisier- und Speicherkreise (87, 88) bestimmt ist, welche zum Sichern der Berücksichtigung nützlicher Konturen der Materialbahn dienen.

6. Einrichtung nach einem der vorhergehenden Ansprüche, dadurch gekennzeichnet, daß die Fenstergeneratoreinrichtungen für die Verarbeitung einen Detektorkreis (94) für die erste Vorderseite aufweisen, die von demjenigen Videosignal abstammt, welches von der Videokamera (33) für die Feststellung der Ränder der Materialbahn kommt, sowie einen Kreis zum Erfassen aller Vorderseiten, die sich aus diesem Signal erheben, einem doppelten Tamponkreis (96), der ein erstes Speicherregister (97) für den linken Rand und ein erstes Speicherregister (98) für den rechten Rand aufweist, mit denen jeweils ein zweites Speicherregister (99) für den linken Rand und ein zweites Speicherregister (100) für den rechten Rand verbunden sind, wobei die Ausgänge der zweiten Register jeweils an die Eingänge von Komparatoren (105, 106) angeschlossen sind, welche an weiteren Eingängen die Ausgangssignale eines Adressierzählers (103) erhalten, der mit der Videokamera (33) zum Feststellen der Ränder der Materialbahn verbunden ist.
